(19) Europäisches Patentamt
European Patent Office
Office européen des brevets

(11) **EP 1 923 725 B1**

(12) **FASCICULE DE BREVET EUROPEEN**

(45) Date de publication et mention
de la délivrance du brevet:
**13.11.2013 Bulletin 2013/46**

(51) Int Cl.:
***G01V 3/26*** *(2006.01)*

(21) Numéro de dépôt: **07004436.7**

(22) Date de dépôt: **05.03.2007**

(54) **Système et procédé de mesurage souterraln de la résistivité**

System und Verfahren zur unterirdischen Widerstandsmessung

System and method for underground resistivity measurement

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **15.11.2006 FR 0609965**

(43) Date de publication de la demande:
**21.05.2008 Bulletin 2008/21**

(73) Titulaire: **IMAGEAU
34830 Clapiers (FR)**

(72) Inventeur: **Pezard, Philippe
34000 Montpellier (FR)**

(74) Mandataire: **Marchand, André
Paul Herard Conseil
50 impasse de la Marionne
13012 Marseille (FR)**

(56) Documents cités:
**EP-A1- 0 863 412      US-A1- 2004 263 175
US-A1- 2005 078 011      US-B1- 6 480 000**

**Description**

La présente invention est relative à des appareils de mesurage et/ou de sondage souterrain, à des procédés de mesurage à l'aide de ces appareils, à des systèmes incorporant ces appareils et à des programmes structurés pour mettre en oeuvre ces procédés et systèmes.

La présente invention est en particulier relative à de tels appareils, systèmes et procédés pour la surveillance sur site et à distance, à haute fréquence et pendant de longues périodes, des évolutions de propriétés physico-chimiques du sous-sol et/ou de nappes souterraines, notamment des nappes phréatiques, et en particulier des évolutions de la résistivité du sous-sol.

Le domaine technique de l'invention est celui de la fabrication des appareils de mesure de la résistivité du sol.

Il existe différentes techniques de mesure de la résistivité du sol, dont celles dans lesquelles on mesure une différence de potentiel (DDP) apparaissant entre deux électrodes enfouies dans le sol, lors de l' « injection » d'un courant électrique au voisinage de ces électrodes.

On peut distinguer les méthodes dans lesquelles on introduit un courant continu dans le sol, comme décrit notamment dans les brevets FR-1 247 925, EP-786 673, et EP-863 412, des méthodes dans lesquelles on introduit un courant alternatif, comme décrit notamment dans les brevets US-2,376,168, US-3,134,941 et US-3,293,542.

Dans le brevet US-3,134,941, il est proposé d'intégrer un commutateur rotatif à un appareil de sondage équipé d'une vingtaine d'électrodes de mesure, pour scruter successivement les électrodes ; un tel système mécanique n'est pas adapté à la surveillance à distance et pendant de longues périodes de la résistivité du sol ; en outre, il ne permet de prévoir qu'un nombre limité de capteurs le long du support de capteurs

Le document US2005/078011 (Abdelhadi) décrit des électrodes intelligentes programmées identiquement pour des surveillances géo électriques.

Cet appareil comporte un générateur, un voltmètre et un contrôleur.

Des interrupteurs adressables sont placés sur les conducteurs électriques qui relient chacune des électrodes constituant les unités de sondage à un appareil de mesure de propriétés électriques.

On distingue également les méthodes « pôle-dipôle » utilisant trois électrodes pour chaque mesure, des méthodes « dipôle-dipôle », « Wenner », ou « Schlulmberger » notamment, utilisant deux électrodes pour l'injection de courant et deux électrodes de mesure.

Le système de mesure proposé dans EP-863 412 qui comporte une série de tronçons de tube isolant reliés deux à deux par un manchon annulaire conducteur constituant une électrode, et dans lequel un conducteur électrique est utilisé pour relier chaque électrode à un appareil en surface qui comporte un système informatique de commande, des multiplexeurs, un appareil de mesure de DDP et une source d'alimentation électrique, est complexe et également inadapté à la surveillance à distance et pendant de longues périodes de la résistivité du sol.

Un objectif de l'invention est de proposer de tels appareils, systèmes et procédés qui soient améliorés et/ou qui remédient, en partie au moins aux lacunes ou inconvénients des appareils, systèmes et procédés connus de mesure de résistivité du sol.

Un objectif de l'invention est de proposer de tels appareils, systèmes et procédés qui facilitent la surveillance régulière de paramètres physico-chimiques du milieu souterrain tels que la température, le potentiel électrique spontané (PS), le potentiel redox (Eh), ou le pH notamment, à des profondeurs de l'ordre de plusieurs dizaines ou centaines de mètres.

Selon un aspect de l'invention, il est proposé un appareil de sondage souterrain comportant un support allongé d'unités de sondage souterrain, i.e. un support de capteurs ou d'électrodes, qui présente deux extrémités ; l'appareil comporte plusieurs unités de sondage (capteurs et/ou électrodes) solidaires du support ainsi que des conducteurs électriques s'étendant entre les unités de sondage et une des deux extrémités du support d'unités de sondage ; l'appareil comporte en outre plusieurs interrupteurs statiques (à semi-conducteur) adressables reliant respectivement les unités de sondage à (au moins) un conducteur d'adressage, ce qui permet de scruter successivement les unités de sondage depuis l'extrémité du support,

Selon des caractéristiques préférentielles de l'invention ;

-    l'appareil comporte deux conducteurs d'alimentation des unités de sondage souterrain, un conducteur de transport de signaux ou données de mesure délivré(e)s par les unités de sondage, ainsi qu'un conducteur de transport de signaux ou données d'adressage, les unités de sondage étant reliées à ces quatre conducteurs qui s'étendent sur sensiblement toute la longueur du support ;

-    chaque unité de sondage comporte une électrode annulaire pour la mesure de la résistivité du milieu souterrain recevant l'appareil ;

-    l'appareil comporte deux conducteurs d'alimentation des électrodes, deux conducteurs de transport d'une différence de potentiel constatée entre deux électrodes, un conducteur (ou conducteur d'adressage) de transport de signaux ou données d'adressage, deux conducteurs d'alimentation basse tension, chaque unité de sondage comportant une électrode et quatre interrupteurs statiques adressables reliant respectivement l'électrode considérée aux deux conducteurs d'alimentation et aux deux conducteurs de transport d'une différence de potentiel, chaque interrupteur statique adressable étant relié au conducteur d'adressage ;

- chaque unité de sondage comporte au moins un capteur pour la mesure d'un ou plusieurs paramètre(s) physico-chimique(s) du milieu souterrain recevant l'appareil ; l'appareil comporte le cas échéant des conducteurs d'alimentation des capteurs, au moins un ou deux conducteurs de transport d'une donnée ou d'un signal de mesure délivré(e) par les capteurs, et un conducteur de transport de signaux ou données d'adressage ; chaque unité de sondage comporte en outre au moins deux, trois, ou quatre interrupteurs statiques adressables reliant respectivement le capteur considéré aux deux conducteurs d'alimentation et au(x) conducteur(s) de transport d'une donnée ou d'un signal de mesure, chaque interrupteur statique adressable étant relié au conducteur d'adressage ;

- le support est rigide ou bien flexible, creux, en particulier tubulaire, et réalisé dans un matériau électriquement isolant ;

- le support comporte plusieurs tronçons assemblés bout à bout et les extrémités longitudinales des tronçons sont équipées de connecteurs, en particulier d'organes de connexion mécaniques et d'organes de connexion électrique -étanches ;

- le support présente une longueur supérieure à 5 ou 10 mètres (m), en particulier une longueur située dans une plage allant de 10 m environ à 50, 100 ou 200 m environ ;

- plusieurs dizaines d'unités de sondage sont régulièrement espacées le long du support, selon un pas d'espacement de l'ordre de 0,5 mètre environ à 5 ou 10 mètres environ, en particulier de l'ordre d'un mètre environ ;

- le support comporte un conducteur de masse et un conducteur d'un potentiel de référence reliés aux interrupteurs et s'étendant sur sensiblement toute la longueur du support.

Selon un autre aspect de l'invention, il est proposé un procédé de surveillance d'un milieu souterrain dans lequel on utilise un appareil selon l'invention, et dans lequel :

- on délivre une donnée d'adresse et une donnée de commande de fermeture à tous les interrupteurs adressables par le conducteur d'adressage, la donnée d'adresse correspond à un (seul) interrupteur déterminé, pour provoquer sa fermeture et relier une électrode (ou une borne d'un capteur) d'une unité de sondage déterminée à un des conducteurs d'alimentation ou de mesure ;

- on effectue l'opération précédente pour fermer les interrupteurs adressables (généralement au nombre d'au moins deux, trois ou quatre) de l'unité (ou des unités) de sondage déterminée (s), de façon à connecter cette (ces) unité(s), le cas échéant à une source d'alimentation électrique, et à une unité de mesure et d'enregistrement des signaux délivrés;

- on effectue une mesure, puis on délivre le cas échéant les mêmes données d'adresse, et on délivre des données de commande d'ouverture à tous les interrupteurs adressables, par le conducteur d'adressage, pour provoquer l'ouverture des interrupteurs adressables précédemment fermés et isoler les électrodes (ou bornes de capteur) de l'unité (ou des unités) de sondage concernée(s) des conducteurs d'alimentation et de mesure ; et

- on répète ces opérations pour différentes unités de sondage de l'appareil.

En variante, l'ouverture des interrupteurs adressables peut être réalisée en appliquant une tension de commande d'ouverture (et/ou ledit potentiel de référence) à un conducteur de commande d'ouverture relié à tous les interrupteurs.

Selon un autre aspect de l'invention, il est proposé un système de mesurage souterrain comportant au moins un appareil de mesurage comportant un support allongé d'unités de mesurage souterrain ; l'appareil comporte plusieurs unités de mesurage solidaires du support, des conducteurs de mesure et d'adressage et le cas échéant d'alimentation, s'étendant entre les unités de mesurage et une des extrémités du support, et plusieurs interrupteurs locaux (de préférence statiques et adressables) reliant respectivement les unités de mesurage à un conducteur d'adressage ; le système de mesurage comporte en outre une source d'alimentation électrique telle qu'une batterie, ainsi qu'un interrupteur de tête (de préférence statique) arrangé pour relier un conducteur d'alimentation des unités de mesurage à la source d'alimentation électrique, ce qui permet, par l'ouverture de l'interrupteur de tête, d'ouvrir et de fermer, sensiblement hors tension, un interrupteur local d'alimentation et/ou de sélection d'une unité de sondage.

Selon un autre aspect de l'invention, il est proposé un système de mesurage souterrain comportant au moins un appareil de mesurage comportant un support allongé d'unités de mesurage souterrain ; l'appareil comporte plusieurs unités de mesurage solidaires du support, des conducteurs d'alimentation, de mesure, et d'adressage s'étendant entre les unités de mesurage et une des extrémités du support, et plusieurs interrupteurs (de préférence statiques et adressables) reliant respectivement les unités de mesurage à un conducteur d'adressage ;

le système de mesurage comporte en outre une unité de traitement prévue pour être reliée aux conducteurs de mesure et arrangée pour l'acquisition - et le cas échéant le traitement - des données/signaux délivrés par les unités de mesurage, ainsi qu'une unité de télécommunication prévue pour être reliée à l'unité de traitement et arrangée pour transmettre à distance les données/signaux reçus - et le cas échéant traités - par l'unité de traitement.

Ceci permet de commander à distance une modification du fonctionnement du système de mesure ; cela permet par exemple de modifier, depuis un poste de commande déporté, la fréquence de scrutation des unités de sondage.

Selon d'autres caractéristiques préférentielles de l'invention ;

- le système de mesurage peut comporter plusieurs appareils de mesure enfouis/enfouissables dans le sol, de structure et fonctions identiques ou similaires, qui peuvent être reliés chacun à une unité respective d'alimentation, de traitement et/ou de télécommunication, ou bien qui peuvent être reliés à une unité d'alimentation de traitement et/ou de télécommunication qui est commune aux différents appareils de mesure ;

- le système de mesurage peut comporter une unité de mesure du courant et/ou de la tension de l'unité d'alimentation, qui est reliée à l'unité de traitement de données ;

- l'unité de télécommunication est une unité de télécommunication par voie hertzienne ou satellitaire.

Dans les procédés selon l'invention, certaines au moins des opérations de sélection et de commande de changement d'état des interrupteurs adressables, d'acquisition, de traitement, et/ou de transmission à distance des données de mesure, peuvent être mises en oeuvre par une unité électronique de traitement de données, telle qu'un calculateur, fonctionnant sous la commande d'un programme.

Ainsi, selon un autre aspect de l'invention, il est proposé un programme (ou logiciel) comportant un code fixé sur un support - tel qu'une mémoire - ou matérialisé par un signal, le code étant lisible et/ou exécutable par au moins une unité de traitement de données - telle qu'un processeur, pour surveiller au moins un paramètre physico-chimique d'un milieu souterrain, le code comportant des segments de code pour effectuer respectivement différentes opérations d'un procédé selon l'invention.

D'autres aspects, caractéristiques, et avantages de l'invention apparaissent dans la description suivante, qui se réfère aux dessins annexés et qui illustre, sans aucun caractère limitatif, des modes préférés de réalisation de l'invention.

Dans la présente demande, sauf indication explicite ou implicite contraire, les termes « signal » et « donnée » sont équivalents et utilisés indifféremment.

La figure 1 illustre schématiquement l'implantation d'un système selon l'invention dans un forage mécaniquement instable réalisé dans le sol, à proximité de la surface.

La figure 2 illustre schématiquement les principaux composants d'un appareil et d'un système selon un mode de réalisation de l'invention, et leurs interconnexions.

La figure 3 illustre schématiquement les principaux composants d'un appareil et d'un système selon un autre mode de réalisation de l'invention, et leurs interconnexions.

La figure 4 illustre schématiquement des tronçons de tube embrochables d'un appareil de mesure selon l'invention, parmi lesquels deux tronçons identiques comportent une « électrode intelligente ».

L'invention facilite la réalisation d'observatoires in-situ autonomes de mesure de paramètres physiques du sous-sol, ce qui permet notamment d'observer et d'analyser la dynamique d'intrusion d'eau salée dans les nappes phréatiques en zones côtières, par des mesures de résistivité et de température du milieu.

L'invention permet notamment de réaliser un suivi durable, en temps réel et à haute définition dans le temps et dans l'espace, de la qualité des eaux du sous-sol.

Un dispositif de mesure in-situ selon l'invention peut comporter un « chapelet » de segments/tronçons de support comportant chacun au moins une électrode revêtue d'une protection inoxydable et/ou un autre type de capteur ; les électrodes/capteurs sont reparti(e)s régulièrement, soit en alternance avec des tronçons de tube isolants de même diamètre extérieur et de longueur variable, soit le long d'un tube rigide en matériau isolant, soit le long d'un support souple dénommé ci-après « flûte ». Ces tubes ou cette flûte, d'une longueur variable selon l'application envisagée (de 1 à 100 m de profondeur sous la surface du sol par exemple), ont pour fonction d'être installé dans le sous-sol le long d'un forage, en milieu meuble ou consolidé. Seuls les conducteurs reliés aux électrodes ou aux divers capteurs in-situ affleurent à l'air libre et sont arrangés pour être connectés à l'unité d'acquisition, de stockage, et de transmission de données. Une fois placé dans un forage, l'appareil de mesure peut être scellé pour une période de plusieurs mois à plusieurs années.

Chaque électrode peut être complétée ou remplacée par au moins un capteur de mesure d'un paramètre physique tel que la température, le pH ou le PS notamment, par un capteur de mesure d'un paramètre chimique tel que décrit dans le brevet US-5,676,820 par exemple, et/ou par un orifice permettant une prise d'échantillons de fluide à la profondeur considérée.

Le système selon l'invention peut ainsi permettre de détecter une migration de pollution dans le sous-sol et d'en enregistrer et analyser les évolutions dans le temps.

Un système selon l'invention peut être conçu et utilisé pour surveiller à distance la température du sous-sol en différents points d'un réservoir de stockage d'énergie géothermique.

Le système selon l'invention permet un suivi de l'ensemble de la colonne du forage en donnant une image du paramètre mesuré à haute résolution spatiale ; il permet de réduire les problèmes de calibrage, et d'obtenir régulièrement des informations dans des conditions de mesures identiques ; le système permet de faire varier la fréquence de la mesure en fonction d'événement extérieurs (pluies, coup de mer, ou pompage notamment). L'invention permet de réaliser un système de mesure précis et peu coûteux.

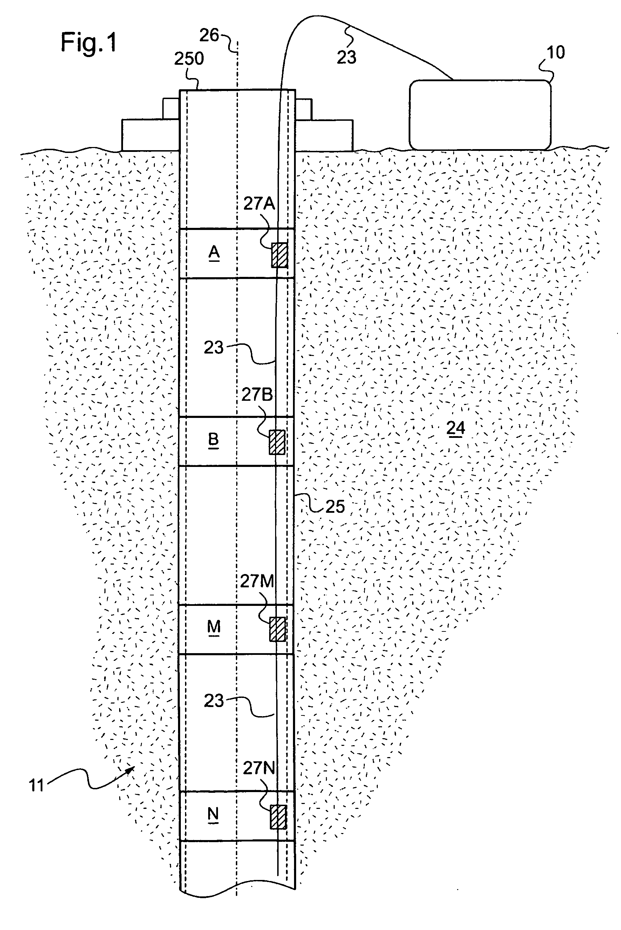

Par référence aux figures 1 à 3, le système de mesure consiste essentiellement en un enregistreur et télé-transmetteur 10 de données couplé à un appareil 11 de sondage, l'ensemble robuste et compact pouvant être alimenté en énergie électrique par un module 12 d'alimentation.

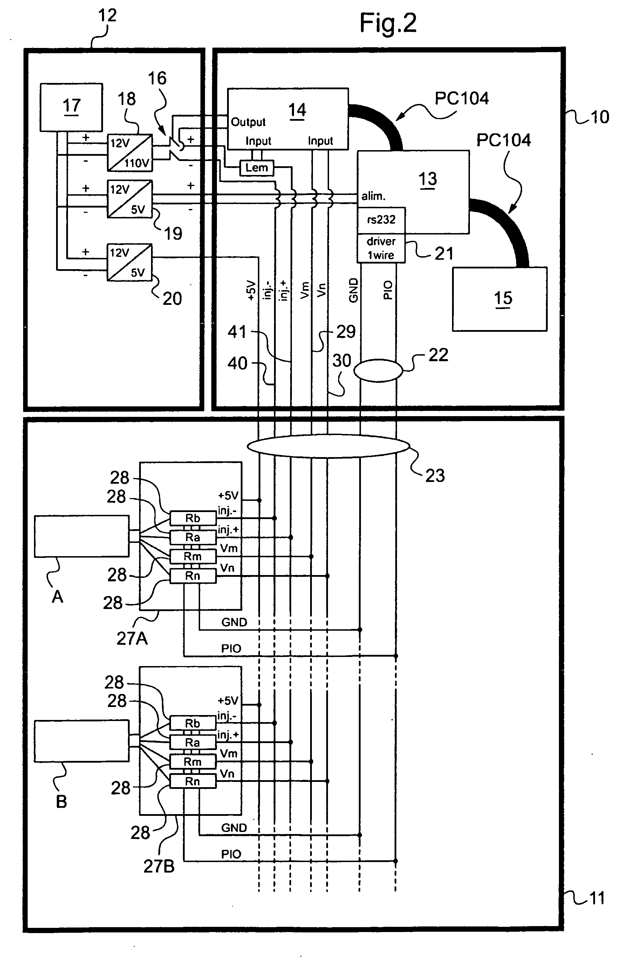

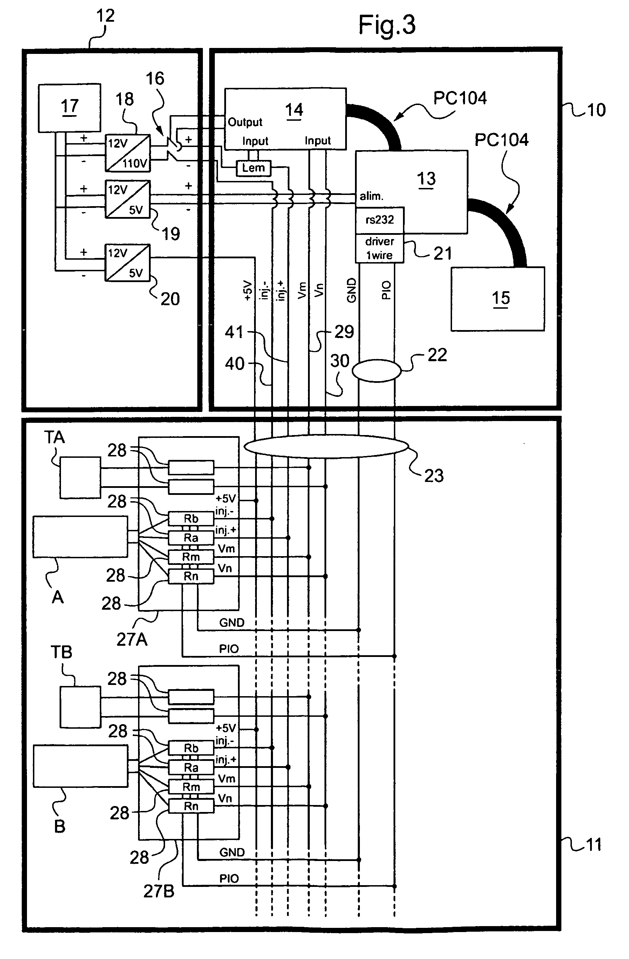

Par référence aux figures 2 et 3, l'unité 10 d'acquisition et de traitement de données comporte une carte 13 de traitement de données de type calculateur et une carte 14 d'acquisition et de conversion analogique/numérique ; l'unité 13 de traitement de données est connectée à un module 15 de transmission GSM/GPRS et intègre un logiciel d'acquisition des mesures, et de commande des cartes 14 et 15 pour la gestion des mesures, de l'alimentation, du bus 22 d'adressage, et des télécommunications.

Les cartes 14 et 15 sont enfichables sur la carte 13 et communiquent avec elle via le bus interne- Ces composants permettent l'acquisition en temps réel des paramètres mesurés, le contrôle des capteurs enfouis solidaires du support de capteurs, le contrôle de la tension de la source d'alimentation, la communication entre la carte 13 et les capteurs ainsi qu'entre la carte 13 et un poste de contrôle distant du système, et la gestion des erreurs.

Pour la mesure de la résistivité apparente en différentes régions du sous sol 24 entourant l'appareil 11 de mesure enfoui supportant les électrodes, on injecte du courant dans deux électrodes (E1 et E2 figures 1 à 3), et on mesure la tension dans le sol entre deux autres électrodes (E3 et E4 figure 1). On calcule la résistivité apparente $\varrho_a$ du sol au milieu des électrodes de mesure, en fonction de cette tension $\Delta V$, de l'intensité du courant I injecté dans le sous sol, et d'un facteur géométrique K correspondant à la configuration des électrodes dans le sol, selon la formule :

$$\varrho_a = K * (\Delta V / I).$$

Par référence à la figure 1, la flûte 11 de mesure peut être essentiellement composée d'un tube 25 en PVC sur lequel sont serties les électrodes E,1, E2, E3, E4 de cuivre revêtues d'une couche d'or, et de conducteurs électriques d'alimentation, de mesure, et d'adressage, qui forment une nappe 23 et qui relient les électrodes à l'extrémité supérieure 250 de la flûte et aux unités 10, 12 d'alimentation et de traitement de données.

Le tube 25 est enfoui dans le sol 24, son extrémité supérieure 250 étant sensiblement affleurante et son axe 26 longitudinal sensiblement vertical.

Pour que chaque électrode puisse fonctionner en injection ou en mesure, chaque électrode est respectivement reliée à une carte 27-E1, 27-E2, 27-E3, 27-E4 comprenant quatre relais ou interrupteurs R1, R2, R3, R4 - également désignés par la référence générique 28 - permettant de choisir la configuration de l'électrode : polarité positive d'injection (+) lorsque le relais R1 est fermé, polarité négative d'injection (-) lorsque le relais R2 est fermé, mesure V3 lorsque le relais R3 est fermé, mesure V4 lorsque le relais R4 est fermé. Chaque relais 28 possède une adresse codée sur 64 bits que le conducteur/bus d'adressage peut lire.

Chaque carte 27-E1, ...27-E4 est alimentée par une tension de référence, de +5V par exemple, qui permet l'alimentation des composants électroniques des carres 27.

Dans les exemples illustrés, le bus d'adressage servant à sélectionner les relais et commander des configurations successives distinctes de l'appareil de mesure 11, est un bus tel que celui proposé par la société DALLAS Semiconductor sous l'appellation « 1 Wire ».

La carte d'acquisition 14 permet de mesurer la tension (V3-V4) aux bornes des deux conducteurs 29, 30 de mesure, qui correspond à la DDP entre les deux électrodes de mesure sélectionnées par l'intermédiaire du bus d'adressage. La carte 14 permet également de mesurer le courant d'injection délivré par l'unité d'alimentation et circulant dans le milieu en contact avec les deux électrodes sélectionnées, via un transducteur courant/tension LEM inséré dans le circuit d'alimentation des électrodes et raccordé à deux bornes d'entrée de la carte 14.

La carte 14 est dotée d'une sortie analogique permettant de commander un relais 16 de puissance principal (« de tête ») inséré dans le circuit d'injection alimenté par une batterie 17.

Le bus d'adressage permet à l'unité 13 de « communiquer » avec tous les relais 28 servant à sélectionner et raccorder les électrodes/capteurs. Ce bus est configuré et commandé par l'unité 13 dotée d'un port série RS232 et d'une carte 21 d'interface, pour détecter tous les relais de la flûte de mesure et les piloter afin de configurer chaque relais d'électrode fermé (en injection ou en mesure) ou ouvert, grâce à l'adresse codée sur 64 bits de chaque relais.

La carre 15 de communication GSM/GPRS est connectée à l'unité 13 via le bus interne. La carte GSM/GPRS peut être configurée par l'emploi de commandes standard et peut établir une communication avec un poste de contrôle (non représenté) situé à distance du système de mesure. Pour le transfert des données mesurées au poste de contrôle, on peut utiliser un protocole de transfert de fichier (FTP).

L'alimentation peut être de type secteur ou externe (panneaux solaires, batterie). Trois convertisseurs de tension 1 à 20 intégrés à l'unité 12 permettent respectivement d'alimenter les électrodes d'injection en 110 Volt (V), les relais adressables en +5V, et l'unité 13 en +/- 5V, l'unité 13 alimentant la carte d'acquisition, le module GSM/GPRS, et le bus 1 Wire.

Le relais 16 entre la source d'alimentation 110V et les électrodes (via les relais adressables) permet d'améliorer la fiabilité du système en protégeant les relais 28 de commande d'une ouverture/fermeture sous tension. Après une mesure, l'ouverture du relais 16 n'est commandée qu'après l'ouverture des relais adressables 28.

Le logiciel intégré à l'unité 13 assure l'initialisation et la reconnaissance des capteurs/électrodes de l'appareil 11, et des cartes 14, 15, et 21, la commande du relais 16 de tête, le pilotage du bus 1 Wire, la commande des relais adressables de l'appareil 11, la mesure de la tension (V3-V4) et du courant d'injection, le calcul de la résistivité, le pilotage du GSM/GPRS et le transfert de données à distance, ainsi que la gestion des erreurs.

L'initialisation comprend ; la détection du « réseau » de composants adressables (relais 28) connectés sur le bus avec reconnaissance de leur adresse unique respective qui est codée sur 64 bits par exemple ; la comparaison de ces adresses avec les adresses enregistrées dans un fichier de configuration préalablement mémorisé dans l'unité 13 ; et l'ouverture de tous les relais adressables.

Le bus d'adressage « 1 Wire » est composé d'une carte d'interface 21 connectée au port série de l'unité 13 et des relais adressables (tels que ceux proposés sous la référence DS24XX par la société DALLAS Semiconductor) qui permettent de sélectionner un capteur et/ou de configurer des électrodes pour une mesure de résistivité.

Le logiciel permet d'enregistrer différents paramètres tels que le nom et les coordonnées géographiques du ou des capteurs enfouis, le nombre et l'espacement des électrodes de chaque capteur, les paramètres temporels de l'injection/acquisition et l'ordre des séquences d'acquisition. Ces paramètres sont sauvegardés dans un fichier de configuration que le logiciel scrute.

Une séquence d'acquisition peut comporter les opérations successives suivantes :

Vérification de l'état (ouvert) du relais de tête par l'intermédiaire de la carte 14 ;

Vérification de l'état (ouvert) des relais 28 de sélection et de raccordement des électrodes par l'intermédiaire du bus 1 Wire ;

Lecture d'une séquence d'acquisition à réaliser dans un fichier de configuration ;

Réalisation de la séquence d'acquisition comprenant :

Commande des relais 28 en fonction de cette séquence par le bus 1 Wire, par exemple :

fermeture relais R1 d'une électrode d'adresse i,

fermeture relais R2 d'une électrode d'adresse i+1,

fermeture relais R3 d'une électrode d'adresse i+2,

fermeture relais R4 d'une électrode d'adresse i+3,

fermeture du relais de tête pour injection de courant,

lecture du courant d'injection par la carte 14,

lecture par la carte 14 de la tension (V3. V4) après une durée déterminée à partir du début de l'injection,

ouverture relais de tête 16,

ouverture relais R1 de l'électrode d'adresse i,

fermeture relais R2 de l'électrode d'adresse i,

ouverture relais R2 électrode d'adresse i+1,

fermeture relais R1 électrode d'adresse i+1,

fermeture relais de tête pour injection de courant en sens inverse du sens précédent,

lecture du courant d'injection,

lecture de la tension (V3-V4) après temporisation,

ouverture relais de tête ;

Répétition de l'acquisition un nombre de fois enregistrée dans les paramètres de configuration de mesure ;

Calcul des moyennes et de la déviation standard des mesures ;
Sauvegarde des résultats dans un fichier ;
Répétition de l'acquisition en fonction du fichier de séquence d'acquisition ;
Ouverture de tous les relais 28 ;
Etablissement d'une connexion Internet avec un poste de contrôle distant ;
Transfert du fichier de résultats ;
Vérification du transfert et fermeture de la connexion Internet.

Dans le mode de réalisation illustré figure 3, chaque unité de sondage de l'appareil 11 comporte, outre une électrode et ses quatre relais adressables associés, un capteur TA, TB de température du milieu entourant l'unité de sondage considérée, ainsi que deux relais adressables 28 supplémentaires qui permettent de connecter sélectivement un des capteurs de température aux conducteurs 29, 30 de mesure et à la carte 14 d'acquisition.

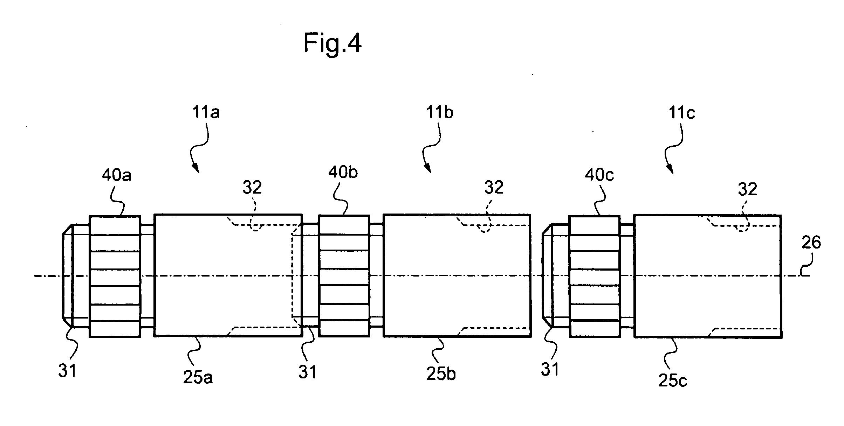

Dans le mode de réalisation illustré figure 4, chaque segment 11a, 11b de l'appareil 11 de mesure comporte un tronçon de tube isolant 25a, 25b. Les segments actifs (identiques) 11a sur chacun desquels est fixé une unité de sondage E1, TA, Y1, E2, TB, Y2, sont alternés avec des segments (identiques) 11b de liaison inactifs, i.e. dénués d'unité de sondage et servant d'entretoise.

Chaque tronçon de tube est équipé d'un connecteur mécanique male 31 à une extrémité, d'un connecteur mécanique femelle (complémentaire du connecteur male) 32 à son extrémité opposée à la première, d'une nappe 23 de conducteurs reliés aux cartes 27E1, 27E2 des unités de sondage des tronçons actifs et connectée à un connecteur électrique male 41 et à un connecteur électrique femelle 42 respectivement disposés, comme les connecteurs mécaniques, aux extrémités longitudinales opposées du tronçon de tube.

Les connecteurs mécaniques permettent l'assemblage mutuel de deux tronçons de tube successifs et les connecteurs électriques permettent de réaliser une continuité électrique entre les conducteurs des nappes solidaires des tronçons. Ceci facilite la réalisation d'un appareil souple ou rigide tel que celui illustré figure 1.

## Revendications

**1.** Système de sondage souterrain de la résistivité **caractérisé en ce qu'**il comporte :

- au moins un appareil (11) de sondage souterrain de la résistivité comportant un support (25, 25a, 25b) allongé d'unités de sondage souterrain de la résistivité, plusieurs unités (E1, E2, E3, E4, TA, TB) de sondage de la résistivité solidaires du support d'unités de sondage et des conducteurs (22, 23, 29, 30) électriques s'étendant entre les unités de sondage de la résistivité et une extrémité (250) du support (25) d'unités de sondage de la résistivité, l'appareil (11) comportant en outre plusieurs interrupteurs adressables (28, R1, R2, R3, R4) reliant les unités de sondage de la résistivité à deux conducteurs (29, 30) de transport d'un signal de mesure ou d'une différence de potentiel, les interrupteurs adressables étant reliés à un conducteur ou bus (22) d'adressage permettant de scruter successivement les unités de sondage de la résistivité depuis l'extrémité du support d'unités de sondage de la résistivité,
- une unité (13) de traitement prévue pour être reliée aux conducteurs (29, 30) de mesure et arrangée pour l'acquisition - et le cas échéant le traitement - des données/signaux délivrés par les unités de sondage de la résistivité, et
- une unité (15) de télécommunication prévue pour être reliée à l'unité de traitement et arrangée pour transmettre à distance les données/signaux reçus - et le cas échéant traités - par l'unité de traitement.

**2.** Système selon la revendication 1 dans lequel l'appareil (11) comporte une nappe (22, 23) de conducteurs d'alimentation, de transport de signaux ou données de mesure et d'adressage, les unités de sondage de la résistivité étant reliées aux conducteurs de la nappe qui s'étend sur sensiblement toute la longueur du support.

**3.** Système selon l'une quelconque des revendications 1 ou 2 dans lequel chaque unité de sondage de la résistivité comporte une électrode (E1, E2, E3, E4) pour la mesure de la résistivité électrique du milieu souterrain recevant l'appareil, l'appareil (11) comportant :

- deux conducteurs d'alimentation haute tension des électrodes,
- deux conducteurs d'alimentation basse tension des unités de sondage de la résistivité,
- deux conducteurs (29, 30) de transport d'une différence de potentiel constatée entre deux électrodes,
- un conducteur ou bus (22) de transport de signaux ou données d'adressage, chaque unité de sondage de la résistivité comportant quatre interrupteurs statiques adressables (28, R1, R2, R3, R4) reliant respectivement l'électrode considérée aux conducteurs d'alimentation et de transport d'une différence de potentiel, chaque interrupteur statique adressable étant relié au conducteur ou bus d'adressage.

**4.** Système selon l'une quelconque des revendications 1 à 3, dans lequel chaque unité de sondage de la résistivité comporte un capteur (TA, TB) d'un paramètre pour la mesure physico-chimique du milieu souterrain recevant l'appareil, l'appareil (11) comportant :

- deux conducteurs de transport d'un signal de mesure délivré par les capteurs,
- un conducteur de transport de signaux ou données d'adressage, chaque unité de sondage comportant au moins deux interrupteurs statiques adressables reliant respectivement le capteur considéré aux conducteurs de transport d'un signal de mesure, chaque interrupteur statique adressable étant relié au conducteur ou bus d'adressage.

**5.** Système selon l'une quelconque des revendications 1 à 4, dans lequel le support est rigide.

**6.** Système selon l'une quelconque des revendications 1 à 4, dans lequel le support est flexible.

**7.** Système selon l'une des revendications 1 à 6, dans lequel le support comporte plusieurs tronçons (25a, 25b, 25c) assemblés bout à bout et équipés chacun d'un connecteur (31, 32) mécanique et d'un connecteur électrique à chaque extrémité longitudinale.

**8.** Système selon l'une quelconque des revendications 1 à 7, dans lequel le support présente une longueur supérieur à 5 ou 10 mètres, en particulier une longueur située dans une plage allant de 15 m environ à 50, 100 ou 200 m environ, et dans lequel l'appareil (11) comporte plusieurs dizaines d'unités de sondage de la résistivité régulièrement espacées le long du support, ainsi qu'un conducteur de masse et un conducteur d'un potentiel de référence reliés aux interrupteurs et s'étendant sur sensiblement toute la longueur du support.

**9.** Procédé de sondage de la résistivité d'un milieu souterrain dans lequel on utilise un système selon l'une quelconque des revendications 1 à 8, et dans lequel :

- on délivre une donnée d'adresse et une donnée de commande de fermeture à tous les interrupteurs adressables par le conducteur d'adressage, la donnée d'adresse correspond à un (seul) interrupteur déterminé, pour provoquer sa fermeture et relier une électrode (ou une borne d'un capteur) d'une unité de sondage déterminée à un des conducteurs d'alimentation ou de mesure ;
- on effectue l'opération précédente pour fermer les interrupteurs adressables de l'unité (ou des unités) de sondage de la résistivité déterminée (s), de façon à connecter cette (ces) unité(s), le cas échéant à une source d'alimentation électrique, et à une unité de mesure et d'enregistrement des signaux délivrés;
- on effectue une mesure, et on délivre des données de commande d'ouverture à tous les interrupteurs adressables, par le conducteur d'adressage, pour provoquer l'ouverture des interrupteurs adressables précédemment fermés et isoler les électrodes (ou bornes de capteur) de l'unité (ou des unités) de sondage concernée (s) des conducteurs d'alimentation et de mesure ; et
- on répète ces opérations pour différentes unités de sondage de l'appareil.

**10.** Programme comportant un code fixé sur un support - tel qu'une mémoire - ou matérialisé par un signal, le code étant lisible et/ou exécutable par au moins une unité de traitement de données - telle qu'un processeur, pour surveiller au moins un paramètre physico-chimique d'un milieu souterrain, le code comportant des segments de code pour effectuer les opérations d'un procédé selon la revendication 9.

**11.** Système selon l'une quelconque des revendications 1 à 8, le système comportant en outre une source (12, 17) d'alimentation électrique telle qu'une batterie, ainsi qu'un interrupteur (16) arrangé pour relier au moins un conducteur (40, 41) d'alimentation des unités de mesurage à la source d'alimentation électrique, ce qui permet, par l'ouverture de l'interrupteur de tête, d'ouvrir et de fermer, sensiblement hors tension, un interrupteur (28, R1, R2, R3, R4) d'alimentation et/ou de sélection d'une unité de sondage de la résistivité.

**Patentansprüche**

**1.** System zum Bestimmen des unterirdischen spezifischen Widerstandes, **dadurch gekennzeichnet, dass** es umfasst:

• mindestens eine Vorrichtung (11) zum Bestimmen des unterirdischen spezifischen Widerstandes, die einen länglichen Träger (25, 25a, 25b) für Einheiten zum Bestimmen des spezifischen Widerstandes, mehrere Einheiten (E1, E2, E3, E4, TA, TB) zum Bestimmen des spezifischen Widerstandes, die mit dem Träger für Einheiten verbunden sind und elektrische Leiter (22, 23, 29, 30), die sich zwischen den Einheiten zum Bestimmen des spezifischen Widerstandes und einem Ende (250) des Trägers (25) für Einheiten zum Bestimmen des spezifischen Widerstandes erstrecken, aufweist, wobei die Vorrichtung (11) darüber hinaus mehrere ansteuerbare Schalter (28, R1, R2, R3, R4) aufweist, die die Einheiten zum Bestimmen des spezifischen Widerstandes mit zwei Leitern (29, 30) zum Transportieren eines Messsignals oder einer Potenzialdifferenz verbinden, wobei die ansteuerbaren Schalter mit einem Steuerleiter oder Steuerbus (22) verbunden sind, die es ermöglichen, nacheinander die Einheiten zum Bestimmen des spezifischen Widerstandes von dem Ende des Trägers für Einheiten zum Bestimmen des spezifischen Widerstandes abzufragen,
• eine Bearbeitungseinheit (13), die ausgebildet ist, um mit den Messleitern (29, 30) verbunden zu werden und die zur Datenaufnahme - und gegebenenfalls der Bearbeitung - der Daten/Signale, die von den Einheiten zum Bestimmen des spezifischen Widerstandes abgegeben werden, ausgebildet ist,
• eine Telekommunikationseinheit (15), die ausgebildet ist, um mit der Bearbeitungseinheit verbunden zu werden und die ausgebildet ist, um die von der Bearbeitungseinheit aufgenommenen - und gegebenenfalls bearbeiteten - Daten/ Signale über weite Strecken zu übertragen.

2. System gemäß Anspruch 1, wobei die Vorrichtung (11) ein Netz (22, 23) von Versorgungsleitern, Messsignal- oder Messdatentransportleitern oder Steuerleitern aufweist, wobei die Einheiten zum Bestimmen des spezifischen Widerstandes mit den Leitern des Netzes verbunden sind, das sich im Wesentlichen über die gesamte Länge des Trägers erstreckt.

3. System gemäß Anspruch 1 oder Anspruch 2, wobei jede Einheit zum Bestimmen des spezifischen Widerstandes eine Elektrode (E1, E2, E3, E4) zum Messen des spezifischen elektrischen Widerstandes der unterirdischen Umgebung, der von der Vorrichtung empfangen wird, aufweist, wobei die Vorrichtung (11) umfasst:

    • zwei Hochspannungsversorgungsleiter für die Elektroden,
    • zwei Niederspannungsversorgungsleiter für die Einheiten zum Bestimmen des spezifischen Widerstandes,
    • zwei Leiter (29, 30) zum Übertragen einer Potenzialdifferenz zwischen zwei Elektroden,
    • einen Steuersignal- oder Steuerdatentransportleiter oder -bus (22), wobei jede Einheit zum Bestimmen des spezifischen Widerstandes vier ansteuerbare statische Schalter (28, R1, R2, R3, R4) umfasst, die jeweils die betreffende Elektrode mit den Versorgungsleitern und den Leitern zum Übertragen einer Potenzialdifferenz verbinden, wobei jeder steuerbare Leiter mit dem Steuersignal- oder Steuerdatentransportleiter oder -bus verbunden ist.

4. System gemäß einem der Ansprüche 1 bis 3, wobei jede Einheit zum Bestimmen des spezifischen Widerstandes einen Sensor (TA, TB) für einen Parameter der physikalisch-chemischen Bestimmung des unterirdischen Milieus aufweist, der von der Vorrichtung empfangen wird, wobei die Vorrichtung (11) umfasst:

    • zwei Leiter zum Transportieren eines Messsignals, das von den Sensoren ausgegeben wird,
    • einen Steuersignal- oder Steuerdatentransportleiter, wobei jede Einheit zum Bestimmen des spezifischen Widerstandes wenigstens zwei ansteuerbare statische Schalter aufweist, die jeweils den betreffenden Sensor mit den Leitern zum Transportieren eines Messsignals verbinden, wobei jeder ansteuerbare statische Schalter mit der Steuersignal- oder Steuerdatentransportleiter verbunden ist.

5. System gemäß einem der Ansprüche 1 bis 4, wobei der Träger steif ist.

6. System gemäß einem der Ansprüche 1 bis 4, wobei der Träger flexibel ist.

7. System gemäß einem der Ansprüche 1 bis 6, wobei der Träger mehrere Abschnitte (25a, 25b, 25c) umfasst, die aneinandergereiht montiert sind und jeweils an jedem Ende in Längserstreckung mit einem mechanischen Verbindungselement (31, 32) und einem elektrischen Verbindungselement versehen sind.

8. System gemäß einem der Ansprüche 1 bis 7, wobei der Träger eine Länge von mehr als 5 oder 10 m aufweist, insbesondere eine Länge in einem Bereich von 15 bis etwa 50, 100 oder 200 m aufweist, und wobei die Vorrichtung (11) mehrere Dutzend Einheiten zum Bestimmen des spezifischen Widerstandes umfasst, die gleichmäßig entlang dem Träger beabstandet sind sowie einen Masseleiter und einen Referenzleiter, die mit den Schaltern verbunden sind und sich über im Wesentlichen die gesamte Länge des Trägers erstrecken.

9. Verfahren zum Bestimmen des spezifischen Widerstandes eines unterirdischen Milieus, wobei man ein System gemäß einem der Ansprüche 1 bis 8 verwendet und wobei:

    - man an alle durch den Steuersignalleiter ansteuerbaren Schalter einen Adressdatensatz und einen Schließsteuerdatensatz sendet, wobei der Adressdatensatz einem bestimmten (einzelnen) Schalter entspricht, um ihn zu schließen und eine Elektrode (oder einen Anschlusspunkt eines Sensors) einer bestimmten Einheit zum Bestimmen des spezifischen Widerstandes mit einem der Versorgungsleiter oder Meßdatentransportleiter zu verbinden;

- man die vorgehende Maßnahme durchführt, um die ansteuerbaren Schalter einer bestimmten Einheit (oder bestimmter Einheiten) zum Bestimmen des spezifischen Widerstandes zu schließen, wobei diese Einheit (diese Einheiten) gegebenenfalls mit einer elektrischen Versorgungsquelle und mit einer Einheit zum Messen und Speichern der ausgegebenen Daten verbunden werden,

- man eine Messung durchführt und man die Steuerbefehle zum Öffnen aller ansteuerbaren Schalter über den Steuerleiter abgibt, um das Öffnen der ansteuerbaren Schalter, die vorher geschlossen waren, hervorzurufen und die Elektroden (oder Sensoranschlusspunkte) der betroffenen Einheit (oder der betroffen Einheiten) zum Bestimmen des spezifischen Widerstandes von den betroffenen Versorgungs- und Messleitern zu isolieren.

10. Programm, das einen Programmcode aufweist, der in einem Datenträger - wie einem Datenspeicher - enthalten ist oder durch ein Signal materialisiert ist, wobei der Programmcode von wenigstens einer Datenverarbeitungseinheit - wie einem Prozessor - lesbar und/oder ausführbar ist zum Überwachen wenigstens eines physikochemischen Parameters eines unterirdischen Milieus , wobei der Programmcode Codesegmente aufweist, um die Maßnahmen eines Verfahrens gemäß dem Patentanspruch 9 durchzuführen.

11. System gemäß einem der Patentansprüche 1 bis 8, wobei das System unter anderem eine elektrische Versorgungsquelle (12, 17), wie eine Batterie, sowie einen Schalter (16) aufweist, der ausgebildet ist, um wenigstens einen Versorgungsleiter (40, 41) für Messeinheiten mit der elektrischen Versorgungsquelle zu verbinden, was durch Öffnen des Kopfschalters es ermöglicht, einen Versorgungsschalter und /oder Auswahlschalter (28, R1, R2, R3, R4) für eine Einheit zum Bestimmen des spezifischen Widerstandes zu öffnen oder zu schließen, wobei dieser im geschlossenen Zustand im Wesentlichen stromfrei ist.

**Claims**

1. An underground resistivity measurement system, **characterized in that** it comprises:

    - at least one underground resistivity measurement apparatus (11) comprising an elongate support (25, 25a, 25b) of underground resistivity measurement units, a plurality of resistivity measurement units (E1, E2, E3, E4, TA, TB) secured to the measurement unit support and electric conductors (22, 23, 29, 30) extending between the resistivity measurement units and one end (250) of the resistivity measurement unit support (25), the apparatus (11) further comprising a plurality of addressable switches (28, R1, R2, R3, R4) connecting the resistivity measurement units to two conductors (29, 30) for conveying a measurement signal or a potential difference, the addressable switches being connected to an addressing conductor or bus (22) making it possible to scan through the resistivity measurement units in succession from the end of the resistivity measurement unit support;

- a processor unit (13) designed to be connected to the measurement conductors (29, 30) and arranged to acquire - and where appropriate to process - data/signals delivered by the resistivity measurement units; and

- a telecommunications unit (15) designed to be connected to the processor unit and arranged to transmit remotely the data/signals as received - and where appropriate processed - by the processor unit.

2. A system according to claim 1, wherein the apparatus (11) includes a flat cable (22, 23) of power supply, measurement data or signal transport, and addressing conductors, the resistivity measurement units being connected to the conductors of the flat cable, which extend over substantially the entire length of the support.

3. A system according to claim 1 or claim 2, wherein each resistivity measurement unit comprises an electrode (E1, E2, E3, E4) for measuring the electrical resistivity of the underground medium receiving the apparatus, the apparatus (11) comprising:

    · two high voltage power supply conductors for the electrodes;
    · two low voltage power supply conductors for the resistivity measurement units;
    · two conductors (29, 30) for conveying a potential difference observed between two electrodes; and
    · an addressing data or signal conveying conductor or bus (22), each resistivity measurement unit having four addressable static switches (28, R1, R2, R3, R4) connecting the electrode under consideration respectively to the power supply and to conductors for conveying potential difference, each addressable static switch being connected to the addressing conductor or bus.

4. A system according to any one of claims 1 to 3, wherein each resistivity measurement unit comprises a sensor (TA, TB) for sensing a parameter for physicochemical measurement of the underground medium receiving the apparatus, the apparatus (11) comprising:

· two conductors for conveying a measurement signal delivered by the sensors; and
· a conductor for conveying addressing data or signals, each measurement unit including at least two addressable static switches connecting the sensor under consideration to the respective conductors for conveying measurement signals, each addressable static switch being connected to the addressing conductor or bus.

5. A system according to any one of claims 1 to 4, wherein the support is rigid.

6. A system according to any one of claims 1 to 4, wherein the support is flexible.

7. A system according to any one of claims 1 to 6, wherein the support comprises a plurality of segments (25a, 25b, 25c) assembled end to end and each fitted with a mechanical connector (31, 32) and with an electrical connector at each of its longitudinal ends.

8. A system according to any one of claims 1 to 7, wherein the support presents a length greater than 5 meters (m) or 10 m, in particular a length lying in a range from about 15 m to about 50 m, 100 m, or 200 m, and wherein the apparatus (11) comprises several tens of resistivity measurement units regularly spaced apart along the support together with a ground conductor and a conductor of a reference potential, which conductors are connected to the switches and extend over substantially the entire length of the support.

9. A method of measuring the resistivity of an underground medium, in which use is made of a system according to any one of claims 1 to 8, and wherein:

· address data and closing control data is delivered to all of the addressable switches by the addressing conductor, the address data corresponding to a (single) determined switch in order to cause the switch to close and connect an electrode (or a terminal of a sensor) of a determined measurement unit to one of the power supply or measurement conductors;
· the preceding operation is performed to close the addressable switches of the determined resistivity measurement unit(s) so as to connect said unit(s), where appropriate to an electrical power supply source, and to a unit for measuring and recording delivered signals;
· a measurement is taken, and opening control data is delivered to all of the addressable switches by the addressing conductor in order to cause the previously-closed addressable switches to open and isolate the electrodes (or sensor terminals) of the measurement unit(s) concerned from the power supply and from the measurement conductors; and
· these operations are repeated for different measurement units of the apparatus.

10. A program comprising code set in a medium - such as a memory - or embodied by a signal, the code being readable and/or executable by at least one data processor unit - such as a processor, in order to monitor at least one physicochemical parameter of an underground medium, the code including code segments for performing the operations of a method according to claim 9.

11. A system according to any one of claims 1 to 8, the system further including an electrical power supply source (12, 17) such as a battery, together with a switch (16) arranged to connect at least one power supply conductor (40, 41) of the measuring units to the electrical power supply source, thus making it possible by opening the head switch, to open and close a switch (28, R1, R2, R3, R4) for powering and/or selecting a resistivity measurement unit, while it is subject to substantially no voltage.

Fig.1

## Fig.2

## Fig.3

# Fig.4

EP 1 923 725 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1247925
- EP 786673 A
- EP 863412 A
- US 2376168 A
- US 3134941 A
- US 3293542 A
- US 2005078011 A, Abdelhadi
- US 5676820 A